# EUROPEAN PATENT SPECIFICATION

(11) **EP 0 643 249 B1**
(45) Date of publication and mention of the grant of the patent: **01.09.1999**
(21) Application number: 94830128.8
(22) Date of filing: 22.03.1994
(51) Int. Cl.: F16L 33/207, B21D 51/36, B21K 21/04

(54) **Manufacturing process of a pressure hose fitting**
Herstellungsverfahren eines Fittings für Druckschläuche
Procédé de fabrication d' un raccord à collerette pour tuyau flexible sous pression

(30) Priority: 23.03.1993 IT MI930549
(43) Date of publication of application: 15.03.1995
(73) Proprietor: Gandini, Carlo, I-29100 Piacenza (IT)
(72) Inventor: Gandini, Carlo, I-29100 Piacenza (IT)
(74) Representative: Paini, Sergio, Dr.

(56) References cited:
- GB-A- 2 051 628
- US-A- 4 159 027
- US-A- 4 691 550
- US-A- 4 804 212
- US-A- 4 991 876
- PATENT ABSTRACTS OF JAPAN vol. 006, no. 017 (M-109), 30 January 1982 & JP-A-56 136244 (MAEDA SANEHIRO), 24 October 1981,

## Description

The present invention concerns the manufacturing process of connections for a flexible tight equipment for oleo-hydropneumatic controls of mechanical members.

The equipment includes a flexible tube with permanent tight connections for coupling the above mentioned flexible tube to mechanical members.

Various types of connections, pipe unions, hose sockets and other joints have been suggested in the last years.

The prior art connections are disclosed and known in the U.S. Patent Nos. 4.691.550 and 4.991.876.

These prior art connections have met with varying degree of success but they have found some problems for high pressure fluid-tight uses.

Particularly the U.S.Patent No.4.691.550 discloses a hose socket making method in which the said socket is placed on the hose and its shoulder is pressed into a groove.

The U.S. Patent No.4.991.876 discloses a connector assembly according to the preamble of claim 1 for hot water heaters in which a tubular crimping member crimps the compression fitting to the hose assembley.

The connections described and claimed in the above U.S. Patents have some inconvenients when high pressure fluid enters in the circuit for the fluid distribution to the working mechanical members, because the high pressure can brake the connection joints.

For these reasons it is desirable to provide an improved manufacturing process which overcomes most of the above mentioned problems.

An improved manufacturing process is provided which efficiently connects a flexible tight equipment for high pressure of oleohydropneumatic controls of mechanical members.

The manufacturing process relates in particular to the manufacturing of the sleeve applied on the external layer of the flexible tube.

Concisely, the new manufacturing process of the external part or metal sleeve begins by cutting, using an appropriate press and counter press, an iron sheet, its thickness being between 2 and 7 mm. and continuous with the mechanical cold curving by means of machines, planned and builded especially for this operation, for the above mentioned part until an hollow small cylinder is obtained, which is then moulded (always by cold pressing), by rolling and stamping.

The part or sleeve above mentioned is then applied and stapled by another appropriate machine which produces the cold deformation on the flexible tube pressing it into its internal part or shank, obtaining a permanent tight coupling, perfectly sealed.

Other processes concerne the manufacturing of the other components of the flexible equipment such as ring nuts (with its edges threaded, tubolar or flanged), metal connections (changeable and pressed types), revolving nuts, screwable, and all other parts.

All manufacturing processes of the above mentioned parts are obtained by particular machines and equipments appropriately planned and engineered for the serial production of flexible equipment, tested for various requirements.

The invention refers to the technical field of manufacturing flexible tight equipments and their metal connections to be applied to mechanical elements or machine parts connected to each other by oleo-hydropneumatic controls and to the manufacturing processes of the complete equipment and their components.

It is well know the use of connections for fluid ducts in oleo-pneumatic circuits for the mechanical parts driving in case of need due to the fluid compression and the pressurization or the depressurization of the tanks, the exchanging or of the same fluids passing in said connections and parts. With regard to the technical stand in the field of this invention, it is to be noted the actual manufacturing of connections for pressurized flexible tubes foresees the making of the same by removal of shavings with machine tools such as a cutters, lathes, pierces, etc.

This technique, which has been applied for many years, was suitable when the materials used were of low quality and of dearth value and when the technical acknowledge of their physical mechanical properties and workability were vague reasons which undoubtedly contributed to the last of these traditional methods.

A careful examination of the shape concerning the parts of the connections and new technologies studied for this purposes have led to the solutions of a conception explained as follows.

Every pressurized flexible tube, to be used in oleodynamic or pneumatic circuits must be equipped at its end with metal connections to join hydraulic or pneumatic circuits where is inserted.

Each connection is usually solidly coupled to the flexible tube by rigid metallic threading, between external flexible tube and internal rigid tube resulting in a fixed connection by the jutting on the metal.

These manufacturing methods require a long working process carried out on full metal bars filled with a considerable quantity of metallic shavings.

In effect, observing the shapes the sizes and proportions between the components forming the completed connection, the big volume of materials consumed for manufacturing of these components and the waste of energy can be immediately understood.

The components of the present connections, sleeve, tubes, nuts, are shells etc. are obtained from one or more full metal portions, working them removing the material.

All the mentioned defects and inconvenients are eliminated by virtue of the new process for the various parts and connections manufacturing, obtaining a complete universal range adaptable to all mechanisms and existing levers, with relevant cost reductions, improving the quality of the finished product and particularly increasing the connections strenght to pressure, to continuous blocking and un-blocking (screwing and unscrewing), to corrosion etc.

Other aims and advantages of the invention will arise from the detailed following specification with the attached sheet of drawings which represent a preferable no limiting embodiment of the invention and of the solution idea as its essence.

Fig. 1 of the sheet is an elevated profile view, in reduced scale, of the metal belt spool and of the shearing machine equipped with a mobile stamper and counter-stamper with a fixed base for the inset of metal discs with concentric holes.

Fig. 2 is an enlarged plan of the metal disc with its concentric hole and of the washer to be extracted.

Fig. 3 is a reduced elevated view, partially in section, of the disc cold curving machine taken in the position "a" (normal threaded at the support and transport shaft), and in position "b" (whilst being pushed against idle mandrel template, until a straight hollow cylinder is formed), and the rolling device by cold forging grooves perpendicular to said cylinder generant.

Fig. 4 is a view in section, in the same proportion as in Fig. 3, of the rolling device by cold forging of the grooves on the straight hollow cylinder (obtained from the metal disc in the previous workings).

Fig. 5 is a reduced outlined view of the stamping machine which causes the size of the said cylinder.

Fig. 6 is an enlarged outline representation of a metal stamp formed by the previous machine.

Fig. 7 is an outlined view, in the same scale as Fig. 6, of the front of the mobile tool of the stamping machine, placed on the top of the metal cylinder, for making the sleeve for the flexible equipment.

Fig. 8 is a rapresentation of a particular version of the flexible equipment complete with its sleeve stapled to the flexible tube, with its relative hexagonal rotating nut, forming the end connection (c) with the fixed hexagonal nut placed at the other end (d).

Fig. 9 is a double profiled and planed representation, in the same scale as in Fig. 8, of the hexagonal nut with external coaxial threaded bushing.

Fig. 10 is a profile view, in the same above scale, of the metal shank or internal element to be inserted in the flexible tube of the equipment.

The drawing represent the flexible tight equipment for oleo-hydropneumatic controls of mechanical members and its manufacturing process and its main metal components.

The flexible tight equipment includes a flexible tube (3) placed at end (c), a connection or joint (1) in which is inserted a hexagonal revolving nut with bushing (8), threaded at its end (d), another connection or joint (9) with a fixed hexagonal nut or in itself revolving.

To form the end (c) of connection (1), a ring nut (6) is used which is inserted in the tube (3). In this way , the internal layer of the said tube (3), grips to the ring nut (6). Above tube (3), the sleeve (2) is inserted so as to make direct contact with layer (4), on the outside of tube (3). Therefore the sleeve (2) is heavily pressed by an appropriate device, not illustrated in the drawings, using concentric radial force directed on the outer side of sleeve (2), shrinking it slightly without damage and maintaining the original internal opening size of tube (3).

In this way, the three components of the connection (1) - of end (c) and sleeve (2), the tube (3) and ring nut (6) - remain fitted without possibility of unscreawing one from other, also assuring its seal even under very high pressures in the tube (3).

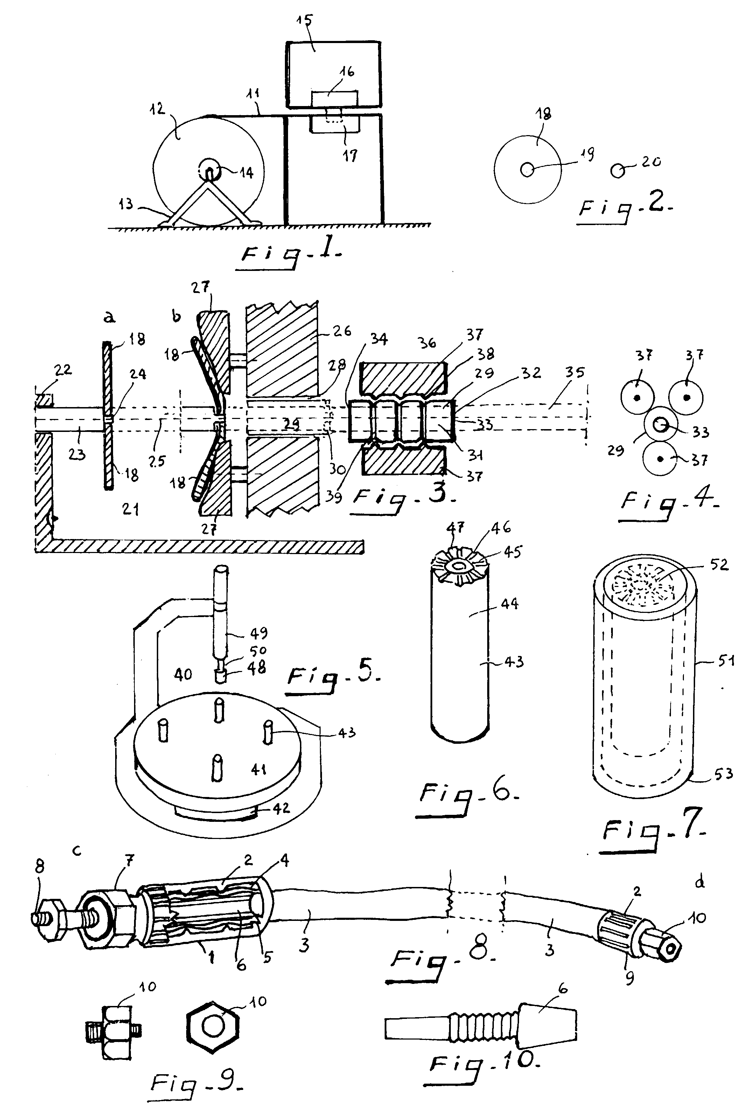

An iron belt (11) wounded on a spool (12) held by a support (13) is driven by a motor (14) leading to the cutter (15) with male press (16), which moves vertically in alternate straight motion, and relating female fixed counter stamp (17), to cut in its turn a circular flat disc (18) and forming a concentric hole (19), removing a washer (20) as represented in Fig. 2.

As shown in fig. 3 each disc (18) is then perpendicularly inserted throughout the hole (19) on the cylindrical terminal segment (24) (of the same diameter) as the rotating threaded cylindrical shaft (23) connected by means of a pair of helicoids to the support (22) fixed to the curving machine (21).

When the drive of the shaft (23) is applied a translatory motion is carried out, from left to right, on its axis (25) moving and pushing the disc (18) against the mandrels (27) with an identical outlined profile, connected to the support (26) by a pair of rollways provided with a circular horizontal hole (28) with a larger diameter of the shaft (23).

Rotational and translational motions of the disc (18) rotate the idle mandrels (27), thereby causing resistance to the disc (18) and plastic deformation by cold curving in the opposite direction of the transfer facing the shaft funnel (23), until a straight hollow cylinder (29) is formed (small cup).

The generants (30) of cylinder (29) and its lateral surface (31) coincide with the generants and the threaded cylindrical shaft (23) and the circular base (32) of the cylinder (29) corresponds to the shaft base on which is mounted.

The cylinder base (32) has a hole (33) corresponding to the hole (19) of the circular disc (18) before its deformation and an outlet (34) on the opposite end.

The shaft (23) continues its straight drive leading to cylinder (29) or small cup through hole (28) of support (26). Said support (26) holds the idle mandrels (27) in place. Moreover a roller device (36) is provided by shaped rollers (37) parallel with juttings (38), in relation and perpendicular to their axis.

The small cup (29) inserted in the shaft (23), is compressed by rollers (37) which make a series of grooves (39) (always by cold pressing), on its lateral surface (31) - perpendicular to the generant (30) of the cylinder (29) - in correspondence with juttings (38) of rollers (37) (figs. 3 and 4).

The shaft (35) then picks up and moves cylinder (29). The small cup (29) is then placed upside down on a die-block (43) of a revolving (41) stamping machine (30) driven by a motor (42) (figs. 5 and 6).

The die-block (43), when ready to receive the upturned small cup (29), has the shape of a straight cylinder with a slightly smaller base than the small cup (29) and of less or equal height.

The cylindrical die-block (43) is characterised by a lateral surface (44) and the base (45) , as shown in Fig. 6, turned upwards and having radial grooves (47).

A female counter-press (48) is placed on a limb (49) acting as a press with vertical translatory motion by a hydraulic jack (51) (or a couple of limbs, one having rotatory motion and the other with vertical translatory motion).

As shown in fig. 5 the counter-press (48) , which has a lateral surface (51) and a closed bottom (52) (see fig. 7), comes down on the small cup (29), placed on the die-block (43) making the lateral surface (31) and the small cup (29), base (32) adhere and press against the lateral surface (44) and base (45) of the die-block (43), thus producing the exact diameter and height of the final sleeve (2).

To be more exact, the main operations for the manufacturing of the flexible tight equipment for oleo-hydropneumatic controls and relating working are herewith briefly described without limiting them to a single way of execution.

The iron sheet belt (11) of the spool (12) is driven by the motor (14) towards the cutter (14) where a male stamp (16) let down vertically on a female counter-stamp (17) under the belt (11) cutting a concentric circular disc (18) with hole (19) and obtaining a circular washer (20). The disc (18) is then slipped from the hole (19) perpendicularly to the axis (25) of the protruding segment (24) coaxial to the rotating shaft (23).

The shaft (23), having rotary and translatory motion along its axis (25), carries the disc (18) against the idle mandrels (27) based on the support (26) provided with hole (28).

The compression of the disc (18) against the mandrels (27) causes by cold funnelled curving of the disc (18) in the form of a small cup (29) opposite to the directional course of the shaft (23) making its lateral surface (31) adhere completely to the above mentioned shaft (23) with the hole (33) of the base (32) and still in the segment (24). The shaft (23) with the small cup (29), moving along its axis (25) for a certain length, reaches a rolling device (36) made up of three cylindrical rollers (37) of the same diameter and with identical outlined profile.

Each roller (37) comprises juttings (38) placed perpendicularly to the generant of the roller itself (37), which, due to the strong adherence and friction developed between the surfaces in contact, cause the grooves (39) making in correspondence to the jutting (38) on the lateral surface (31) of the small cup (29) normal to its generant (30).

The small cup (29) thus incised, is then taken on to a die-block (43) of a revolving (41) press stamping machine (40) driven by a motor (42) on which other die-blocks (43) are placed, equal or different according to the heights and diameters of the small cups (29) to be produced.

The counter-press (48) has a cylindrical form with a lateral surface (51), blind base (52), and a counter positioned opening (53) turned downwards.

The pressure produced by the counter-press (48) housed vertically in the mobile limb (49), by means of a hydraulic jack (50) acting as a press, on the small cup (29) upturned on the die-block (43), stamps the same so that it takes up the pre-established height and diameter for use as a sleeve (2) in the end (c) connection (1).

At the end of the manufacturing, the small cup (29) - as described - is thus denominated as a sleeve (2) or external element of a connection (1).

## Claims

1. Manufacturing process of joints or connections (1; 9) at the ends (c; d) of a flexible tight equipment for oleohydropneumatic controls of mechanical members, said flexible tight equipment comprising a flexible tube (3) made up of an external layer (4) and internal layer (5) in which a metal ring-nut (6) is inserted, the one end (c) of the tube (3) having a metal connection (1) with an external sleeve (2) shaped as a right cylinder (29) or a small cup with a lateral surface (31), a base (32) with hole (33) and an outlet (34) opened on the opposite end, said right cylinder (29) or small cup or sleeve (2) being placed and strongly pressed on the external layer (4) of the flexible tube (3) containing the ring-nut (6), the tube (3) having on the other opposite end (d) a metal connection (9) with nut (10) with rotating threaded bushing or fixed, to be connected to components or mechanical parts, characterised in that said right cylinder (29) or small cup is manufactured departing from a sheet-iron belt (11), obtaining a circular disc (18) therefrom through a stamp operation using a stamp (16) and a counter stamp (17) and using a shaft (23) to carry the disc (18) against idle mandrels (27), thus causing a cold deformation of the disc (18) so that to obtain said right cylinder (29) or small cup in the form of the sleeve (2).

2. Manufacturing process of joints or connections (1; 9) at the ends (c; d) of a flexible tight equipment for oleohydropneumatic controls of mechanical members, according to claim 1, characterised in that said disc (18) is obtained with a concentric hole (19) by means of a cutter (15), with male stamp (16) which inserts itself into a female counter-stamp (17) and thus carrying said disc (18) by means of a shaft (23), with rotatory and translatory movement along its axis (25), slipping the disc (18) by means of its circular hole (19) into the segment (24) of the shaft (23) in normal position until it is brought into forced contact with the mandrels (27) hinged horizontaly on the vertical support (26) of the disc curving machine (21), due to the friction of the same on the above mentioned outlined mandrels (27) obtaining the funelled upturing of the disc (18) on the shaft (23) in the opposite sense that of feed thus forming a right cylinder (29) or a small cup coinciding with the sleeve (2).

3. Manufacturing process of joints or connections (1; 9) at the ends (c; d) of a flexible tight equipment for oleohydropneumatic controls of mechanical members, according to claim 2, characterised in that the hollow right cylinder (29) or sleeve (2) successivelv reaches a rolling device (36) provided with rollers (37) of the same diameter with identical jutting (38) normal to their generants, said cylinder (29) or sleeve (2) being placed in adherence with friction at the center of the aforesaid rollers (37) making on its lateral surface (31) the grooves (39) normal to the generant (30) in correspondence to the juttings (38) of the rollers (37).

4. Manufacturing process of joints or connections (1; 9) at the ends (c; d) of a flexible tight equipment for oleohydropneumatic controls of mechanical members, according to claim 2 and 3, characterised in that the right cylinder (29) or sleeve (2) then reaches a revolving (41) and stamping machine (40) driven by a motor (42), on the said turn-table (41) cylindrical die-block (43) being placed with the upper base (45) with radial grooves (46) having at intervals radial juttings (47) to receive the hollow cylinders (29) or sleeves (2) upside down on which a counter-press (48) lets downs with lateral surface (51), bottom (52) and opening (53), being housed in a limb (48) or press driven by hydraulic jack (50) to module in a definitive way and confer the exact pre-established sizes in relation to the height and the diameter of the final right cylinder (29) or small cup or sleeve (2).

## Patentansprüche

1. Herstellungsverfahren für Verbindungen oder Anschlüsse (1;9) an den Enden (c;d) von biegsamen, dichten Einrichtungen für die hydropneumatische Kontrolle von mechanischen Geräten, besagte biegsame, flexible Einrichtung enthält einen flexiblen Schlauch (3) bestehende aus einer Aussenschicht (4) und einer Innenschicht (5) in welche eine metallische Ringmutter (6) eingelassen ist,das eine Ende (c) des Schlauches (3) hat eine Metallanschluss (1) mit einer Aussenmuffe (2) in der Form eines rechten Zylinders (29) oder einem schmalen Becher mit einer seitlichen Fläche (31) ,einer Grunplatte (32) mit Loch (33) und einem Auslauf (34) auf der Gegenseite geöfnett, besagter rechter Zylinder (29) oder schmalen Becher oder Muffe (2) wird auf die Aussenschicht (4) des flexiblen Schlauches (3)mit der Ringmutter gesteckt und fest verpresst (6), der Schlauch (3) hat am anderen Ende (d) einen metallischen Anschluss (9) mit Mutter (10) mit drehender Gewindebüchse oder festsitzend, um mit Komponenten oder mechanischen Teilen verbunden werden zu können, dadurch gekennzeichnet, daß der besagt rechte Zylinder (29), oder schmalen Becher ist die Herstellung aus einem Eisenblechring (11) welcher zu einer runden Scheibe (18) wird woraus durch eine Stanzoperation mittels Stempel (16) und einem Gegenstück (17) und durch eine Welle (23) welche die Scheibe (18) gegen die fassonierte Pindeln (27) drückt, dies verursacht eine kalte Verformung der Scheibe (18) sodass der besagte rechte Zylinder (29) oder schmale Becher die Form der Muffe (2) erhält.

2. Herstellungsverfahren für Verbindungen oder Anschlüsse (1;9) an den Enden (c;d) von beigsamen, dichten Einrichtungen für hydropneumatische Kontrolle von mechanischen Geräten, nach Anspruch 1, dadurch gekennzeichnet, daß die besagte Scheibe (18) die Herstellung mit einem konzentrischen Loch (19) mittels einem Schneider (15), mit Stempel (16) welcher in ein Gegenstück (17) einfährt und dadurch die besagte Scheibe (18) mittels einer Welle (23) hält, mit drehender und übersetzender Bewegung entlang seiner Achse (25), wodurch die Scheibe (18) durch sein drehendes Loch (19) in Segment (24) der Welle (23) gleitet in normaler Position bis es in starken Kontakt mit den Pindeln (27) am vertikalen Support (26) der Scheibebeigemaschine (21) horizontal aufgehängt, durch dessen Reibung an obenerwähnter Pindeln (27) wird die Scheibe (18) trichterförmig auf der Welle (23) in die Gegenrichtung wodurch der rechte Zylinder (29) geformt wird oder ein schmalen Becher mit Muffe (2).

3. Herstellungsverfahren für Verbindungen oder Anschlüsse (1;9) an den Enden (c;d) von beigsamen, dichten Einrichtungen für die hydropneumatische Kontrolle von mechanischen Geräten , nach Anspruch 2, dadurch gekennzeichnet, daß der hohle rechte Zylinder (29) oder Muffe (2) allmählich eine rollende Vorrichtung (36) wird mit Rollen (37) ausgerüstet mitdemselben Durchmesser (38) mit identischen Aufnahmen normal zu ihren Mantellinien besagter Zylinder (29) oder Muffe (2) wird mit Reibung haftend im Zentrum der vorgenannten Tollen (37) platziert machen an ihren seitlichen Flächen (31) die Rillen (39) normal zu Mantellinie(30) in überreinstimmung zu den Aufnahmen (38) der Rollen (37).

4. Herstellungsverfahren für Verbindungen oder Anschlüsse (1;9) an den Enden (c ;d) von beigsamen, dichten Einrichtungen für die hydropneumatische Kontrolle von mechanischen Geräten, nach Ansprüche 2 und 3, dadurch gekennzeichnet, daß der rechte Zylinder (29) oder Muffe (2) dann eine drehende (41) und stempelnde Maschine (40) erreicht angetrieben von einem Motor (42), auf besagter Drehtisch (41) wird ein zylindrischer Formblock (43) auf der oberen Basis (45) platziert mit radialen Rillen (46) welche unterbrochen werden von radialen Höhlungen (47) um die hohlen Zylinder (29) oder Muffen (2) umzukehren an welchen eine Gegenpresse (48) mit seitlicher Fläche (51) , Boden (52) und Öffnung (53), welche in einem Schenkel (48) eingebaut ist oder druckbetrieben durch hydraulische Hebevorrichtung (50) um eine definitive Richtung zu steuern und übertraegt die genau vorgegebene Grösse in Bezug auf die Höhe und den Durchmesser des rechten Zylinders (29) oder schmalen Bechers oder Muffe (2).

## Revendications

1. Procédé de fabrication de raccords ou joints (1;9) aux extrémités (c;d) d'équipements flexibles et étanches pour des commandes oléohydropneumatiques d'organes mécaniques, ledit équipement flexible comprenant un tuyau (3) flexible composé d'une couche (4) extérieure et d'une couche (5) intérieure dans lequel un embout (6) métallique est inséré, une extrémité (c) du tuyau (3) ayant un raccord (1) métallique avec un manchon (2) extérieur en forme de cylindre (29) droit ou de petit pot avec une surface (31) latérale, une base (32) avec un trou (33) et une bouche (34) ouverte à l'extrémité opposée, ledit cylindre (29) droit ou petit pot ou manchon (2) étant placé et fortement pressé sur la couche (4) extérieure du tuyau (3) flexible contenant l'embout (6) , le tuyau (3) ayant à l'autre extrémité (d) opposée un raccord (9) métallique avec un écrou (10) à douille taraudée tournante ou fixe et reliable aux composants ou aux parties mécaniques , caractérisé en ce que ledit cylindre (29) ou petit pot est fabriqué partant d'une bande de tôle de fer (11), obtenant un disque (18) circulaire au moyen d'une opération d'estampage utilisant une matrice (16) et une contre-matrice (17) et employant un arbre (23) pour transporter le disque (18) contre les mandrins (27) profilés, donc causant une déformation à froid du disque (18) de façon à obtenir ledit cylindre (29) droit ou petit pot dans la forme d'un manchon (2).

2. Procédé de fabrication de raccords ou joints (1;9) aux extrémités ( c;d) d'équipements flexibles et étanches pour des commandes oléohydropneumatiques d'organes mécaniques, selon la revendication 1, caractérisé en ce que ledit disque (18) est obtenu avec un trou (19) concentrique au moyen d'une machine à cisailler (15), avec une matrice (16) mâle qui s'insère dans une contre-matrice (17) femelle et donc transportant ledit disque (18) au moyen de l'arbre (23), avec un mouvement de rotation et de translation le long de son axe (25), poussant le disque (18) au moyen de son trou (19) circulaire sur le segment (24) de l'arbre (23) en position perpendiculaire jusqu'à le porter au contact forcé des mandrins (27) fixés horizontalement sur le support (26) vertical de la machine (21) à cintrer du disque (18), dû à la friction de lui-même sur les susmentionnés mandrins (27) fous, obtenant une déformation en entonnoir du disque (18) sur l'arbre (23) en sense inverse à celui de l'avancement, formant ainsi le cylindre (29) droit ou petit pot qui coïncide avec le manchon (2).

3. Procédé de fabrication de raccords ou joints (1;9) aux extrémités ( c ;d) d'équipements flexibles et étanches pour des commandes oléohydropneumatiques, selon la revendication 2, caractérisé en ce que le cylindre (29) droit et creux ou manchon (2) atteint successivement un dispositif (36) roulant muni de galets (37) du même diamètre avec d'identiques reliefs (38) perpendiculaires à leurs génératrices, ledit cylindre (29) ou manchon (2) étant placé de façon adhérente avec une friction au centre des susmentionnés galets (37) produisant sur la surface (31) latérale des sillons (39) perpendiculaires à la génératrice (30) et correspondants aux reliefs (38) des galets (37).

4. Procédé de fabrication de raccords ou joints (1;9) aux extrémités ( c;d) d'équipements flexibles et étanches pour des commandes oléohydropneumatiques d'organes mécaniques, selon le revendications 2 et 3, caractérisé en ce que le cylindre (29) droit ou manchon (2) atteint ensuite une machine tournante (41) et à étamper (40) actionnée par un moteur (42), sur ladite machine tournante (41) étant placés des poinçons(43) cylindriques avec une base (45) supérieure avec des sillons (46) radiaux ayant des cavités radiales espacées (47) pour recevoir les cylindres (29) creux ou manchons (2) renversés sur lesquels descend une contre-matrice (48), avec une surface (51) latérale, un fond (52) et une ouverture (53), étant insérée dans la matrice (48) ou actionnée à pression par un piston (50) hydraulique pour former définitivement le cylindre (29) final ou petit pot ou manchon (2) et lui donner les dimensions exactes et fixées par rapport à la hauteur et au diamètre.
